# DEMANDE DE BREVET EUROPEEN

(11) **EP 2 826 668 A1**
(43) Date de publication de la demande: **21.01.2015**
(21) Numéro de dépôt: 14176822.6
(22) Date de dépôt: 11.07.2014
(51) Int. Cl.: B60Q 1/26, F21S 8/10, H01L 25/075, H05B 37/02, H05B 33/08, F21Y 101/02

(54) **Dispositif lumineux pour un véhicule automobile**

(30) Priorité: 17.07.2013 FR 1357043
(71) Demandeur: VALEO VISION, 93012 Bobigny Cedex (FR)
(72) Inventeur: Roger, Christophe, 49070 SAINT-LAMBERT-LA-POTHERIE (FR)

(57) **Abrégé**

L'invention a pour objet un dispositif lumineux pour un véhicule automobile comportant au moins :
- un premier circuit pilote (P1) et un premier groupe de LEDs (1), le premier circuit pilote étant apte à piloter le premier groupe de LEDs (1) de manière à ce que le premier groupe de LEDs participe à la réalisation d'une première fonction d'éclairage/signalisation,
- un deuxième circuit pilote (P2) et un deuxième groupe de LEDs (2), le deuxième circuit pilote étant apte à piloter le deuxième groupe de LEDs (2) de manière à ce que le deuxième groupe de LEDs participe à la réalisation d'une deuxième fonction d'éclairage/signalisation,
caractérisé en ce que le dispositif comporte une capsule (E) dans lequel sont encapsulés les premier (1) et deuxième (2) groupes de LEDs et ce qu'à la première fonction et à la deuxième fonction est attribuée une couleur d'émission distincte spécifique.

## Description

L'invention concerne un dispositif lumineux pour un véhicule automobile.

Les fonctions d'éclairage/signalisation des véhicules automobiles actuels comportent, le plus souvent, une première fonction, telle que la fonction des feux de position ou de stationnement PL pour Parking Light en anglais, et une deuxième fonction, telle que la fonction des feux clignotants de changement de direction, désignée fonction TI pour Turning Indicator en anglais. Ces fonctions d'éclairage/signalisation peuvent également comporter une troisième fonction, telle que la fonction d'éclairage jour, dite fonction DRL, pour Day Running Light en anglais. Il est connu de réaliser la première fonction PL et la troisième fonction DRL par un même premier groupe de LEDs et la deuxième fonctionTI par un deuxième groupe de LEDs.

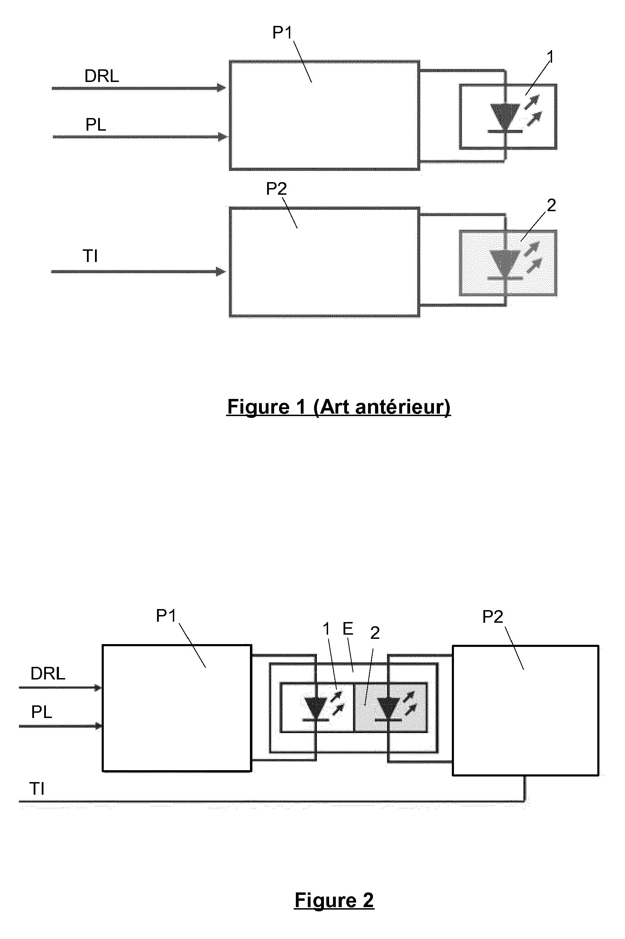

De manière classique, ainsi que représenté en figure 1, relative à l'art antérieur, les premier (1) et deuxième (2) groupes de LEDs sont commandés chacun par un circuit pilote séparé (P1, P2), chaque fonction d'éclairage/signalisation, à laquelle peut-être en outre associée une couleur d'émission, en général lumière blanche pour la fonction double DRL/PL et couleur ambre pour la fonction TI, étant implémentée indépendamment l'une de l'autre, tant pour ce qui concerne l'encapsulation des groupes de LEDs que leur protection ESD contre les chocs électriques par décharge électrostatique, du fait de la commutation de ces fonctions.

La présente invention a pour objet de simplifier l'implémentation de la commande des fonctions d'éclairage/signalisation précitées et de la connexion des groupes de LEDs exécutant ces fonctions.

En particulier, un objet de la présente invention est la suppression des diodes de protection polarisées en inverse en fonctionnement, tout en maintenant la protection ESD des groupes de LEDs, ce qui permet de réduire sensiblement les coûts d'implémentation de ces fonctions d'éclairage/signalisation à l'échelle industrielle.

Un autre objet de la présente invention est, compte tenu de la suppression précitée, la réduction des connexions électriques externes des groupes de LEDs implémentant ces fonctions d'éclairage/signalisation.

Le dispositif lumineux pour un véhicule automobile, objet de l'invention, comporte au moins :
- un premier circuit pilote et un premier groupe de LEDs, le premier circuit pilote étant apte à piloter le premier groupe de LEDs de manière à ce que le premier groupe de LEDs participe à la réalisation d'une première fonction d'éclairage/signalisation
- un deuxième circuit pilote et un deuxième groupe de LEDs, le deuxième circuit pilote étant apte à piloter le deuxième groupe de LEDs de manière à ce que le deuxième groupe de LEDs participe à la réalisation d'une deuxième fonction d'éclairage/signalisation.

Il est remarquable en ce que le comporte une capsule dans lequel sont encapsulés les premier et deuxième groupes de LEDs et ce qu'à la première fonction et à la deuxième fonction est attribuée une couleur d'émission distincte spécifique.

On entend par fonction d'éclairage/signalisation un faisceau lumineux réglementaire adapté pour l'une ou plusieurs des fonctionnalités suivantes : l'éclairage de la route devant le véhicule, la signalisation du véhicule aux autres usagers de la route ou l'éclairage de l'intérieur de l'habitacle du véhicule.

Dans un mode de réalisation de l'invention, la capsule est dimensionnée de manière à ce qu'elle puisse contenir uniquement les premier et deuxième groupes de LEDs.

Si on le souhaite, le premier circuit pilote peut être apte à piloter le premier groupe de LEDs de manière à ce que le premier groupe de LEDs participe à la réalisation d'une troisième fonction d'éclairage/signalisation à laquelle est attribuée une couleur d'émission identique à celle de la première fonction.

Avantageusement, le premier circuit pilote est distinct du deuxième circuit pilote.

En variante, les premier et deuxième circuits pilotes peuvent être un même circuit pilote unique.

Le cas échéant, il peut être prévu que le circuit pilote unique de commande délivre une tension d'alimentation commutée pour la commande du premier ou du deuxième groupe de LEDs.

Par exemple, le circuit pilote unique peut comporter un étage de commutation apte à commuter la tension d'alimentation pour la commande du premier ou du deuxième groupe de LEDs.

Dans un mode de réalisation de l'invention, les premier et le deuxième groupes de LEDs sont montées en tête-bêche.

On entend par montage tête-bêche un montage des groupes de LEDs dans lequel l'anode d'une LED du premier groupe est connectée à la cathode d'une LED du deuxième groupe et la cathode de la LED du premier groupe est connectée à l'anode de la LED du deuxième groupe.

Cette caractéristique permet l'avantage d'exécuter la commande conjointe simultanée du premier et du deuxième groupe de LEDs à l'état passant respectivement à l'état bloqué, ou réciproquement, le groupe de LEDs à l'état bloqué exécutant une fonction de protection contre les décharges électrostatiques du groupe de LEDs à l'état passant.

Le cas échéant, il peut être avantageusement prévu que ledit circuit pilote unique comporte, outre les fonctions de commande et d'alimentation du premier respectivement du deuxième groupe de LEDs, un inverseur de polarité du signal de commande et d'alimentation délivré en parallèle au premier et au deuxième groupe de LEDs.

Dans un mode de réalisation de l'invention, ladite première fonction d'éclairage/signalisation est distincte de ladite deuxième fonction.

Par exemple, il peut être prévu que ladite première fonction d'éclairage/signalisation soit un feu de position PL et que ladite deuxième fonction soit un indicateur de direction TI.

Le cas échéant, ladite troisième fonction peut être un feu diurne DRL.

Avantageusement, à la première fonction d'éclairage/signalisation peut être associée la couleur lumière blanche et à la deuxième fonction d'éclairage/signalisation peut être associée la couleur ambre.

Le dispositif lumineux pour un véhicule automobile, objet de l'invention, trouve application à l'équipement de véhicules automobiles de tout type.

Il sera mieux compris à la lecture de la description et à l'observation des dessins ci-après dans lesquels, outre la figure1 relative à l'art antérieur :
- la figure 2 représente un dispositif lumineux pour un véhicule automobile, conforme à l'objet de la présente invention, dans un premier exemple de mise en oeuvre non limitatif ;
- la figure 3 représente un dispositif lumineux pour un véhicule automobile, conforme à l'objet de la présente invention, dans un deuxième exemple de mise en oeuvre préférentiel non limitatif ;
- la figure 4 représente le schéma électrique équivalent des groupes de LEDs mis en oeuvre pour l'exécution du dispositif lumineux pour un véhicule automobile dans le premier et dans le deuxième exemple de mise en oeuvre, correspondant aux figures 2 et 3.

Le dispositif lumineux pour un véhicule automobile, conforme à l'objet de la présente invention, est maintenant décrit en liaison avec la figure 2.

En référence à la figure précitée, le dispositif objet de l'invention comporte au moins une fonction double d'éclairage/signalisation commandée par un premier circuit pilote P1 et exécutée à partir d'un premier groupe de LEDs 1 et une autre fonction d'éclairage/signalisation commandée par un deuxième circuit pilote P2 et exécutée à partir d'un deuxième groupe de LEDs 2.

Ainsi qu'on l'observera sur la figure 2, le premier 1 et le deuxième 2 groupe de LEDs sont intégrés, soit encapsulés E, dans un même feu de signalisation. On comprend que grâce à ce mode de mise en oeuvre, on obtient ainsi, d'une part, une diminution des coûts de fabrication, et, d'autre part, un meilleur rendement d'éclairage par les diodes électroluminescentes, dans la mesure où le rapprochement des groupes de LEDs, du fait de l'intégration, permet un rapprochement des deux sources lumineuses ainsi constituées et une optimisation du rendement d'éclairage du dispositif optique associé à celles-ci.

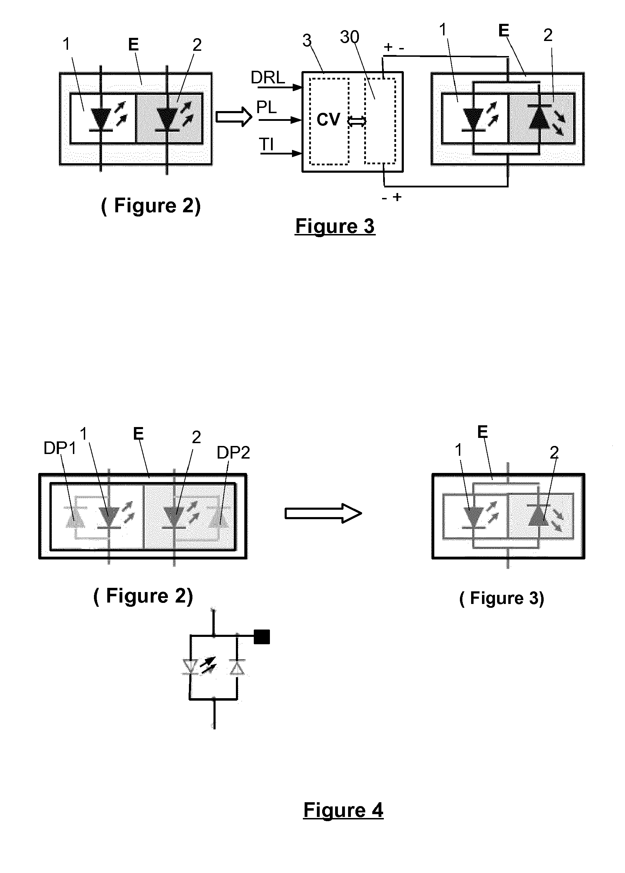

En outre, en référence à la figure 3, conformément au deuxième mode de mise en oeuvre du dispositif lumineux pour un véhicule automobile, objet de la présente invention, celui-ci comporte un premier 1 et un deuxième 2 groupe de LEDs, montés en tête-bêche, en parallèle, ainsi que représenté au dessin. Dans cette configuration, le dispositif lumineux objet de l'invention comporte alors un circuit pilote unique 3 de commande de l'un ou l'autre du premier 1 respectivement du deuxième 2 groupe de LEDs.

En référence à la même figure 3, on observe que les premier groupe 1 et deuxième 2 groupe de LEDs sont connectés en parallèle, l'un ou l'autre des groupes de LEDs précités étant alimenté dans le sens direct respectivement inverse, ainsi qu'il sera décrit ci-après.

En effet, le circuit pilote unique de commande 3 délivre une tension d'alimentation commutée, +-;- +, pour la commande de l'un ou l'autre du premier 1 respectivement du deuxième 2 groupe de LEDs. Ce mode opératoire permet d'exécuter la commande conjointe simultanée du premier et du deuxième 2 groupe de LEDs à l'état passant respectivement à l'état bloqué, ou réciproquement.

Selon un aspect remarquable du dispositif lumineux pour un véhicule automobile, objet de l'invention, dans le deuxième mode de mise en oeuvre précité, le groupe de LEDS à l'état bloqué exécute une fonction de protection contre les décharges électrostatiques du groupe de LEDs à l'état passant, c'est-à-dire lorsque ce dernier exécute la fonction d'éclairage/ signalisation sélectionnée. On comprend bien sûr que chaque groupe de LEDs joue réciproquement le rôle de protection précitée, en fonction de la commande exercée pour l'exécution de l'autre fonction d'éclairage/signalisation.

Dans le but d'une mise en oeuvre spécialement adaptée du dispositif lumineux objet de l'invention, on indique, en référence à la même figure 3, que le circuit pilote unique 3 comporte avantageusement, outre les fonctions de commandée d'alimentation du premier 1 respectivement du deuxième 2 groupe de LEDs, ces fonctions étant exécutées par un convertisseur CV commandé par les signaux de commande d'entrée, ce convertisseur pouvant bien entendu reprendre les fonctions classiques correspondant à la commande de la fonction double commandée par le premier circuit pilote P1 et de l'autre fonction commandée par le deuxième circuit pilote P2, un inverseur de polarité 30 des commandes d'alimentation + - ; - + délivrées en parallèle au premier 1 et au deuxième 2 groupe de LEDs.

Dans un mode de réalisation spécifique, la fonction double d'éclairage/signalisation est de la fonction DRL/PL et l'autre fonction est la fonction TI.

Enfin on comprend qu'à la fonction double d'éclairage/signalisation DRL/PL est associée la couleur lumière blanche et à la fonction d'éclairage signalisation TI est associée la couleur ambre, représentée en grisé au dessin.

Sur la figure 4, on a représenté le schéma électrique équivalent au premier groupe 1 et au deuxième groupe 2 de LEDs, dans le cas de la mise en oeuvre du dispositif lumineux objet de la présente invention conformément au premier mode de réalisation, représenté en figure 2, respectivement au deuxième mode de réalisation, représenté en figure 3.

Pour assurer la protection ESD contre les décharges électrostatiques, dans le cas du premier mode de réalisation, figure 2, il est nécessaire, selon une solution classique, de monter en tête-bêche sur chaque groupe de diodes LEDs 1 et 2 une première diode ou groupe de diodes de protection DP1 respectivement une deuxième diode ou groupe de diodes de protection DP2.

Au contraire, dans le cas du deuxième mode de réalisation, figure3, le montage des diodes de protection n'est pas nécessaire, ces dernières pouvant ainsi être supprimées, en raison de la fonction de diode de protection exécutée par l'un ou l'autre des groupes de diodes 1 ou 2 ou réciproquement. Ainsi qu'on l'a représenté en figure 4, le schéma équivalent électrique des groupes de diodes représentées au dessin est alors identique pour les deux modes de réalisation du dispositif lumineux pour un véhicule automobile, conforme à l'objet de la présente invention.

En particulier grâce à la mise en oeuvre du deuxième mode de réalisation, en raison du montage en parallèle en tête-bêche du premier 1 et du deuxième 2 groupe de LEDs, on obtient une économie de deux connexions électriques et la suppression des circuits auxiliaires de protection ESD, constitués par des diodes de protection spécifiques dans l'art antérieur.

## Revendications

1. Dispositif lumineux pour un véhicule automobile comportant au moins :
- un premier circuit pilote (P1) et un premier groupe de LEDs (1), le premier circuit pilote étant apte à piloter le premier groupe de LEDs (1) de manière à ce que le premier groupe de LEDs participe à la réalisation d'une première fonction d'éclairage/signalisation,
- un deuxième circuit pilote (P2) et un deuxième groupe de LEDs (2), le deuxième circuit pilote étant apte à piloter le deuxième groupe de LEDs (2) de manière à ce que le deuxième groupe de LEDs participe à la réalisation d'une deuxième fonction d'éclairage/signalisation,
**caractérisé en ce que** le dispositif comporte une capsule (E) dans lequel sont encapsulés les premier (1) et deuxième (2) groupes de LEDs et ce qu'à la première fonction et à la deuxième fonction est attribuée une couleur d'émission distincte spécifique.

2. Dispositif selon la revendication 1, **caractérisé en ce que** la capsule (E) est dimensionnée de manière à ce qu'elle puisse contenir uniquement les premier (1) et deuxième (2) groupes de LEDs.

3. Dispositif selon l'une des revendications précédentes, **caractérisé en ce que** le premier circuit pilote (P1) est apte à piloter le premier groupe de LEDs (1) de manière à ce que le premier groupe de LEDs participe à la réalisation d'une troisième fonction d'éclairage/signalisation à laquelle est attribuée une couleur d'émission identique à celle de la première fonction.

4. Dispositif selon l'une des revendications précédentes, **caractérisé en ce que** le premier circuit pilote (P1) est distinct du deuxième circuit pilote (P2).

5. Dispositif selon l'une des revendications 1 à 3, **caractérisé en ce que** les premier (P1) et deuxième (P2) circuits pilotes sont un même circuit pilote unique (3).

6. Dispositif selon la revendication précédente, **caractérisé en ce que** le circuit pilote unique de commande (3) délivre une tension d'alimentation commutée pour la commande du premier (1) ou du deuxième (2) groupe de LEDs.

7. Dispositif selon la revendication précédente, **caractérisé en ce que** le circuit pilote unique (3) comporte un étage de commutation apte à commuter la tension d'alimentation pour la commande du premier (1) ou du deuxième (2) groupe de LEDs.

8. Dispositif selon la revendication précédente, **caractérisé en ce que** ledit circuit pilote unique (3) comporte, outre les fonctions de commande et d'alimentation du premier (1) respectivement du deuxième (2) groupe de LEDs, un inverseur de polarité (+-;-+) du signal de commande et d'alimentation délivré en parallèle au premier (1) et au deuxième (2) groupe de LEDs.

9. Dispositif selon l'une des revendications précédentes, **caractérisé en ce que** les premier (1) et le deuxième (2) groupes de LEDs sont montées en tête-bêche.

10. Dispositif selon l'une des revendications précédentes, **caractérisé en ce que** ladite première fonction d'éclairage/signalisation est distincte de ladite deuxième fonction.

11. Dispositif selon la revendication précédente, **caractérisé en ce que** ladite première fonction d'éclairage/signalisation est un feu de position et ladite deuxième fonction est un indicateur de direction.

12. Dispositif selon la revendication précédente, **caractérisé en ce que** ladite troisième fonction est un feu diurne.

13. Dispositif selon l'une des revendications précédentes, **caractérisé en ce que** à la première fonction d'éclairage/signalisation est associée la couleur lumière blanche et à la deuxième fonction d'éclairage/signalisation est associée la couleur ambre.
